# EUROPEAN PATENT APPLICATION

(11) **EP 1 693 787 A1**
(43) Date of publication of application: **23.08.2006**
(21) Application number: 05290379.6
(22) Date of filing: 18.02.2005
(51) Int. Cl.: G06K 19/07

(54) **Method for managing smart card power depending on the environment**

(71) Applicant: Axalto SA, 92120 Montrouge (FR)
(72) Inventor: Guignard, Philippe, c/o Axalto SA, 78431 Louveciennes Cedex (FR)
(74) Representative: Renault, Patricia Marie Jacqueline

(57) **Abstract**

The present invention concerns a method for managing the power of a portable object, the portable object being provided with at least storage means and connection means able to connect said portable object to at least an object-accepting device. The method consists in managing the power of said portable object by activating or not, or by modifying or not internal functionalities according to the physical environment of said portable object.

## Description

The present invention concerns a method for managing the power of a portable object such as a smart card according to its environment, in particular the device with which the portable object communicates and/or is connected.

### TECHNICAL FIELD

Cards with integrated circuit also called smart cards are small plastic devices, which contain one or more embedded integrated circuits. A card with integrated circuit can be for example a memory card or a wired logic card or a microprocessor card also called microprocessor chip card. A smart card is accessed with a card reader that has an aperture or slot or else into which the smart card is inserted. The card may also be contact less: in that case, the card reader does not need any aperture. The smart card reader covers every device used to receive or to be connected with a smart card and work with it (read, write, delete, and/or every possible operation). The smart card reader can be part or linked with a computer, a handset, a pin pad or else...

Until now, a smart card was intended to work with a specific, determined and fixed environment with its specific operating constraints, when manufactured or personalized. A smart card could be for example designed for a personal computer environment that refers to the ISO standard, or for a handset environment that refers to GSM standard. The operating conditions required by the environment define the possible values of various and different types of measurable variables when said card is working. The ambient temperature is one. Some standard operating conditions are less restrictive than other standard operating conditions in term of maximum operating temperature. GSM standard uses a maximum ambient temperature of *T*_{*Amax*} = 85°C and ISO standard uses *T*_{*A*max} = 50°C . Now if a card is used in an ISO environment, i.e. for *T*_{*A*max} = 50°C , it may encounter problems in a GSM environment where the temperature could rise *T*_{*A* max} = 85°*C*. In one hand the environment and the concerned standard set the operating conditions and in the other hand the card is chosen and fixed when personalized.

As a consequence, a manufacturer has to dedicate a card for a particular usage when personalized. This process lacks flexibility. It implies the precise knowledge of the type of card required for each type of usage.

A goal of the present invention is to allow a card not to be dedicated for a particular usage when manufactured or personalized.

A goal of the present invention described hereafter is to offer a method allowing a card to work in different physical environments.

### SUMMARY OF THE INVENTION

The present invention concerns a method for managing the power of a portable object, the portable object being provided with at least storage means and connection means able to connect said portable object to at least an object accepting device characterized in that it consists in managing the power of said portable object by activating or not, or by modifying or not internal functionalities according to the physical environment of said portable object.

The present invention concerns also said portable object.

### BRIEF DESCRIPTION OF THE DRAWINGS

Other purposes, features and advantages of the invention will appear on reading the description which follows of the implementation of the method according to the invention and of a mode of realization of a portable object designed for this implementation, given as a non-limiting example, and referring to the attached drawings in which:
- Figure 1 is a schematic view of an example of realization of an electronic unit integrated in a portable object such as a smart card;
- Figure 2 is a schematic view of the assignment of the connectors of a smart card connected to an ISO 7816-x compliant card accepting device;
- Figure 3 is a schematic view of an example of application for the portable object according to the present invention;
- Figure 4 is a schematic view of the system according to the present invention comprising means allowing to activate or not an internal functionality as Flash memory.

### BEST WAY OF REALISING THE INVENTION

This invention belongs to the field of portable object provided with at least memory means and connection means able to connect said portable object to at least an object-accepting device with which the portable object is able to communicate. The meaning of the term "connect" is very general: it covers means for allowing the portable object to transfer signals one way (from portable object to portable object accepting device or from portable object accepting device to portable object) or bi-directionally to said portable object accepting device in a contact or contact less mode.

The method according to the present invention is aimed at managing the power of a portable object according to the environment into which the portable object works.

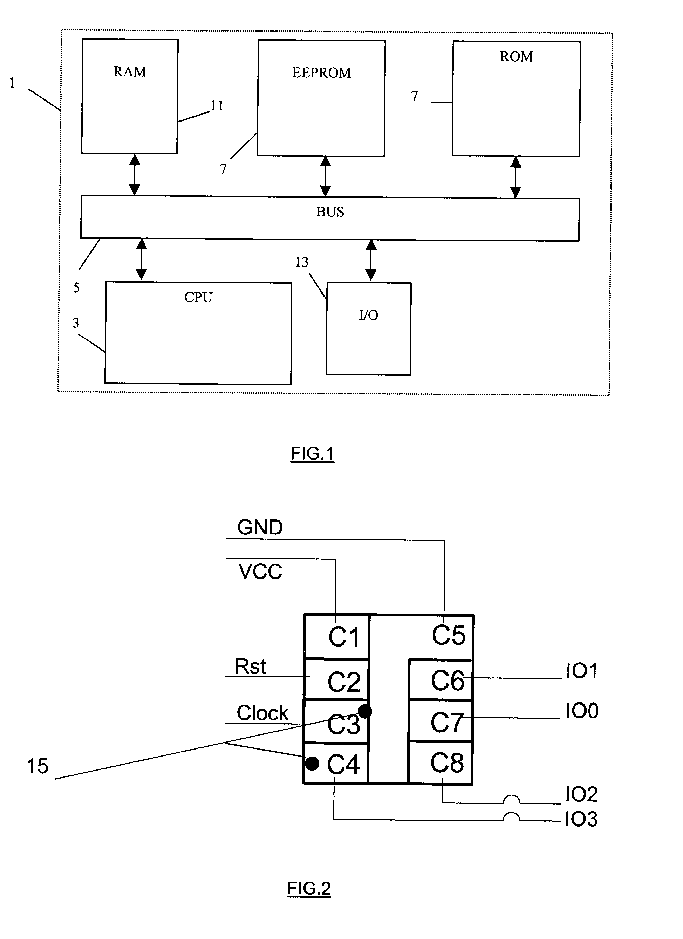

In a particular embodiment of the present invention shown in figure 1, the portable object is a smart card with an integrated electronic unit 1: the electronic unit 1 comprises at least a microprocessor CPU 3 with two-way connection via an internal bus 5 to a non volatile memory 7 of type ROM, EEPROM, Flash, FeRam, a volatile memory 11 of type RAM and input/output means 13 to communicate with the exterior. The unit 1 may comprise additional components not shown, connected to the internal bus. This type of unit is generally manufactured as a monolithic integrated electronic circuit, or this unit can be composed of several chips connected together, which once physically protected by any known means can be assembled on the integrated circuit card or similar for use in various fields, such as the bank and/or electronic payment cards, mobile radio telephony, pay television, health and transport...

In more details, the chip integrated in the thickness of the card is connected to a module. As indicated in figure 2, the module comprises a set of flat connectors 15 C1 to C8 (also called contacts, pads) on the surface of the card allowing said chip to be connected and communicate with a card-accepting device. The card is connected to the card-accepting device through its electrical contacts 15.

The card-accepting device is part of different type of environment like a personal computer, a handset or else. The information exchange between the card and the card-accepting device refers to standard like ISO 7816-xx, USB or ISO14443 contact less.

The different standard (ISO 7816-xx, USB, contactless or else) defines the dimension, the location, the assignment, and the use of the electric connectors 15. For example, as illustrated on figure 2, in ISO standard, the following signals are associated with said connectors:
C1 with Vcc;
C2 with RST;
C3 with Clk;
C5 with GND;
C7 with l/O0;
C4, C6, C8 with other uses (like USB and contact less).

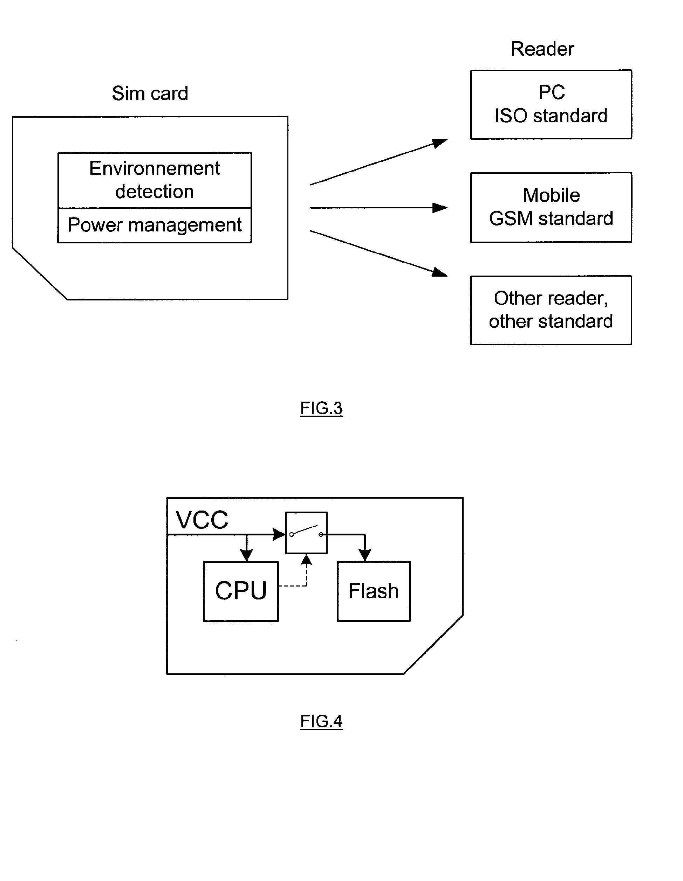

As shown by figure 3, in one particular application, the card, here a SIM card, may be used in different environments: PC (ISO standard), Mobile (GSM standard) or other environments.

Power dissipation could be a critical path when the maximum ambient temperature defined by a concerned standard is applied to the card.

If the chip junction temperature reaches the maximum junction temperature (i.e. 110°C) the package or the plastic of the module could be damaged.

The junction temperature is defined as: *T*_{*J*} = *(P×R*_{*TH*}*)+T*_{*A*}
Here is an example with a dissipated power of *P* = 200mW , and a global thermal resistance of the package of *R*_{*TH* =} 200W / °C .
When the environment is a handset, the card must still work at ambient temperature *T*_{*A*max} = 85°C and the junction temperature is *T*_{*J*} = (200e⁻³ x 200)+ 85 =125°C
When the environment is a PC, the card must still work at *T*_{*A*max} = 50°C and the junction temperature is *T*_{*J*} = (200e⁻³ x 200)+ 50 = 90°C

So if junction temperature exceeds 110°C , like in the handset case above, the plastic of the module melt.

The current consumption has to be controlled by the card to avoid power dissipation issue.

The method according to the present invention consists in activating or not, or modifying or not internal functionalities according to the environment of the portable object (and for example to the concerned standard) in order to avoid power dissipation issues. The term "functionality" covers any variable the portable object may change to modify the power dissipation as hardware components as memory (for example Flash memory), or microcontroller function as cryptography function, or microcontroller clock frequency, or an external communication channel between card and card accepting device

The method consists in validating or not, modifying or not functionalities of the chip according to the environment. So in the case illustrated here above, power management should, for instance, prohibit flash memory access with handset and it should allow flash memory access with personal computer. The Flash memory has a current consumption that increases dramatically the power balance. And using the flash memory in the handset case above could make power dissipation issue. The policy power management according to the present invention handles cards functionalities when each environment is detected.

The card manages its chip power by controlling its current consumption. In order to reduce power consumption the policy power management can:
- Deactivate determined components having known current consumption like flash memory. A voltage regulator switches off the voltage supply of the flash (figure 4);
- Reduce the microcontroller frequency to make its consumption decrease (with for example a divisor);
- Prohibit cryptography;
- Limit the duty cycle or the throughput of a communication channel;
- Disable external channel like USB or contactless.

According to one form of realization, the card identifies continually what kind of card-accepting device it communicates with in order to identify the physical environment and to optimize consequently the card performance versus power consumption.

The detection of the environment depends of the physical environment itself. In one embodiment, the portable object, here the smart card, detects the presence of a specific device with which it is connected and checks its type by regularly polling the input(s)/output(s) or by receiving a signal from it through a specific input/output.

According to one embodiment for ISO detection, the smart card detects an ISO environment when it detects the input/output is the unique communication channel and the card is reset in an ISO compliant scheme (reset sequence, timing, external clock...). The card then knows if it is inserted in an ISO device.

In a particular embodiment for card detection, at the smart card power-on, the card performs several tests through a dedicated hardware circuitry in order to check the presence (or absence) of some electric signals. When the tests are ended, an internal bit is positioned to indicate if the electric signals of the ISO mode are present, or another internal bit is set if it is the signals of the USB mode that are detected or any other bit to indicate the presence of any other environment. The test is based on a level detection at power on, so that a high level detected means no signal connected or a presence of a logical signal such as a clock. The test is hardware implemented and it is done before software is running.
For example, C2, C3, C7 at high-level detected means there is no ISO connection: no RST, CLK or lO0 signals. The same for C4, C8 or C6 at high-level detected means there is no connection with external signal.

Once the physical environment is detected, the card activates the adapted functionalities to guaranty good power dissipation. To do so, the operating system (OS) of the CPU 3 of the smart card determines the internal functionalities allowed for the detected environment. According to one embodiment, a table is stored in the non-volatile memory in which all the internal functionalities are indicated for each possible environment (Handset, personal computer...).

In the embodiment described above, depending on the bit set by the hardware detection circuitry, the code executed allows the use of internal components or not.

As shown by figure 4, the smart card comprises means for activating or not Flash memory according to the environment detected. When the environment is identified, the portable object read said table indicating if Flash memory has to be activated or not in such an environment. As seen before, the means for activating Flash memory are here constituted by a voltage regulator, which switches on or off the voltage supply of the Flash.

The smart card embeds hardware and/or software functional blocks that are used to:
- detect the physical environment of the card;
- activate, modify, or not the internal functionalities which are adapted to the detected environment.

The invention is particularly advantageous since smart cards can be used with any type of environment. The invention is not limited to the applications described here above: it applies to any type of hardware devices as card, token... used in different environments, which implies power dissipation problems.

## Claims

1. Method for managing the power of a portable object, the portable object being provided with at least storage means and connection means able to connect said portable object to at least an object accepting device **characterized in that** it consists in managing the power of said portable object by activating or not, or by modifying or not internal functionalities according to the physical environment of said portable object.

2. Method according to claim 1, **characterized in that** it consists in controlling power dissipation of said portable object by activating or not, or modifying or not internal functionalities according to the physical environment of said portable object.

3. Method according to one of claims 1 or 2, **characterized in that** it consists in activating or not, or modifying or not hardware components as memory (for example Flash memory), or microcontroller function as cryptography function, or microcontroller clock frequency, or an external communication channel between card and card accepting device .

4. Method according to one of claims 1 to 3, **characterized in that** it consists in identifying the kind of portable object-accepting device with which said portable object is connected in order to identify the physical environment.

5. Portable object being provided with at least storage means and connectors able to connect said portable object to at least an object-accepting device, **characterized in that** it comprises means for activating or not, or for modifying or not internal functionalities according to the physical environment of said portable object in order to manage the power of said portable object.

6. Portable object according to claim 5, **characterized in that** it comprises means for detecting said physical environment of said portable object.

7. Portable object according to one of the claims 5 or 6, **characterized in that** it comprises means for activating or not, or modifying or not hardware components as memory (for example Flash memory), or microcontroller function as cryptography function, or microcontroller clock frequency, or an external communication channel between card and card accepting device .

8. Portable object according to one of the claims 5 to 7, **characterized in that** the portable object is a card with integrated circuit.

9. Electronic unit intended to be integrated in a portable object according to one of the claims 5 to 8.

10. Computer program including program code instructions to execute the steps of the method according to one of claims 1 to 5 when said program is run in a data processing system.
